Europäisches Patentamt

European Patent Office

Office européen des brevets

(19)

(11) Publication number : **0 594 337 A2**

(12) # EUROPEAN PATENT APPLICATION

(21) Application number : **93308128.3**

(22) Date of filing : **12.10.93**

(51) Int. Cl.⁵ : **G06F 15/72**

(30) Priority : **22.10.92 GB 9222206**

(43) Date of publication of application :
**27.04.94 Bulletin 94/17**

(84) Designated Contracting States :
**DE FR GB**

(71) Applicant : **International Business Machines
Corporation
Old Orchard Road
Armonk, N.Y. 10504 (US)**

(72) Inventor : **Paradine, Christopher
16 Hazel Road
Southampton, Hampshire S02 7GA (GB)**
Inventor : **Woodwark, John Ross
47 Stockers Avenue
Winchester, Hampshire SO22 5LB (GB)**

(74) Representative : **Burt, Roger James, Dr.
IBM United Kingdom Limited Intellectual
Property Department Hursley Park
Winchester Hampshire SO21 2JN (GB)**

(54) **A data processing system.**

(57)    The present invention provides a system and method for creating a model of an object, such a model being created within a 3D space defined by the system. The system includes a display device on which an image representing said model can be displayed, and an entry means for enabling a user to enter an ambiguous 2D line representative of a feature of the object. When the entered line is such that its endpoints are known in the 3D space, a processor within the system subjects data representing the ambiguous line to a number of separate processing steps, each step producing data representing an unambiguous candidate line in said 3D space. A calculation device then calculates the value of a specific parameter of all the unambiguous candidate lines produced by the processor and a comparison means selects, according to the values calculated by the calculation device, one of the unambiguous candidate lines as a representation in said 3D space of the ambiguous 2D line.

FIG. 1

The present invention relates to a data processing system and in particular to a system for creating a model of an object, such a model being created within a 3D space defined by the system.

Currently models of objects can be created using a class of systems referred to as computer aided design (CAD) systems. These CAD systems allow precise models of objects to be created within the system, from which technical drawings, scaled models, templates, etc. can be created. Such CAD systems are becoming commonplace, and are used in many business areas, eg. car design, architecture, etc. to assist designers in the design of new products.

However CAD systems are not really suitable for the initial stages of design when the designer has various ideas in his head. A designer who has thought of an idea for a new product will want to get that idea down in some tangible form while it is still clear in his mind. Typically the designer will make a quick sketch on a piece of paper; being used to pen and paper a designer will generally find this the most convenient form in which to experiment with the design ideas. At this stage of the design process, the designer is not particulary interested in achieving absolute precision, but is instead attempting to illustrate the general design features, and get a feel of how the object will look.

Sketched drawings do, however, have their disadvantages. The major disadvantage is that a sketch will only show the object from one particular direction. Several sketches will need to be produced to show the full shape of the object. Further the drawings are not very adaptable. Whilst lines can be erased and redrawn, it is not possible to shift the viewing angle by a small amount. If such a view is required, another sketch must be made.

Despite this disadvantage, sketches do have the advantage that the designer is able to make a note of his design idea quickly without having his thought process distracted. For this reason, a designer would be unlikely to work with a CAD system during this early stage of design, since such a system would not allow the designer to enter rough sketches quickly. Typically such CAD systems might require that the designer draw each line from two orthogonal viewpoints, which would disrupt the general thought process.

It is hence an object of the present invention to provide a system in which the designer would be able to quickly enter his ideas in a convenient form, and would then be able to review and correct them interactively.

Accordingly the present invention provides a system for creating a model of an object, such a model being created within a 3D space defined by the system, the system comprising: a display device on which an image representing said model can be displayed an entry means for enabling a user to enter an ambiguous 2D line representative of a feature of the object, the endpoints of the ambiguous 2D line being known in the 3D space; a processor for subjecting data representing the ambiguous line to a number of separate processing steps, each step producing data representing an unambiguous candidate line in said 3D space; a calculation device for calculating the value of a specific parameter of all the unambiguous candidate lines produced by the processor; and comparison means to select, according to the values calculated by the calculation device, one of the unambiguous candidate lines as a representation in said 3D space of the ambiguous 2D line.

Viewed from a second aspect the present invention provides a method of operating a data processing system to create a model of an object, such a model being created within a 3D space defined by the system, the system including a display device on which an image representing said model can be displayed, and an entry means for enabling a user to enter an ambiguous 2D line representative of a feature of the object, the endpoints of the ambiguous 2D line being known in the 3D space; the method comprising the steps of: subjecting data representing the ambiguous line to a number of separate processing steps, each step producing data representing an unambiguous candidate line in said 3D space; calculating the value of a specific parameter of all the unambiguous candidate lines produced by the processor; and selecting, according to the values calculated by the calculation device, one of the unambiguous candidate lines as a representation in said 3D space of the ambiguous 2D line.

The system and method of the present invention has several advantages over the prior art techniques which use pen and paper, or the more precise CAD systems. By employing an entry device which enables the user to quickly enter his ideas, the user is not impeded from entering the ideas as they arise. Further, since the ideas are then stored in the memory of the system they can be manipulated in many different ways. For example the image created can be rotated so as to view the object from a different direction. The image can be amended either by deleting lines, adding lines, or altering lines already created.

The particular technical problem which is tackled by the present invention is that arising from the realisation that 2D lines entered by a user of the system are ambiguous, in that they could be construed as representing a number of different lines in 3D space. A 3D line drawn in 2D can in theory lie anywhere on the surface through that line to the eye. The system must tackle the problem of how to interpret 2D lines, drawn interactively, so as to generate the most likely line in 3D space.

The fact that a 2D line drawn by a designer is ambiguous in 3D space is not usually a problem when the designer is using paper, since he is sketching the object from a particular direction and such lines will not need to be interpreted in isolation to decide the 3D shape of the object sketched. If any ambiguity exists the designer would produce another sketch showing the object as viewed from another direction. However if a system is to create a 3D model from the lines sketched by the designer so that such a model can be later viewed from any direction, then the system must remove the ambiguity that is intrinsic to a line drawn in 2D.

One solution is to get more information from the designer, for instance by demanding that the designer draw each line from two orthogonal viewpoints as already mentioned. However this is undesirable during the early stages of design as the designer does not wish to get distracted by such requirements of the system.

The system and method of the present invention enable the user to enter design ideas in an easy uninterrupted manner. This is achieved by the system's ability to interpret an ambiguous 2D line entered by the user as an umambiguous 3D line. By using such a system wire frame models of an object can readily be created.

Although wire-frame images are inevitably ambiguous when fixed in one viewing direction, this is not really a problem with a 'live' system. The image can be rotated or set in motion with appropriate commands, and such motion immediately gives the human viewer the correct 3D impression.

The present invention will be described further, by way of example only, with reference to an embodiment thereof, as illustrated in the accompanying drawings, in which:

Figure 1 is a block diagram illustrating a system in accordance with the preferred embodiment of the present invention;

Figure 2 is a flow diagram illustrating the process carried out by the system of the preferred embodiment; and

Figure 3 shows a wire-frame model constructed using the system of the preferred embodiment.

The user of a system in accordance with the preferred embodiment of the present invention is not assumed to be a computer expert (nor to want to become one), and is not required to think in terms of XYZ 2D projections. Such a user interacts with the system by means of an entry device which enables the user to input hand-drawn lines. Many such devices exists for drawing on a computer screen, for example magnetic tablets, resistive and capacitive overlays, laser scanners, etc. These all allow a user to line-draw a 2D representation. In preferred embodiments the user has a tracked stylus, hereafter called a 'pen', with which he draws the object in perspective directly on the surface of a thin, flat screen. He can then, for example, use a mouse to rotate the model.

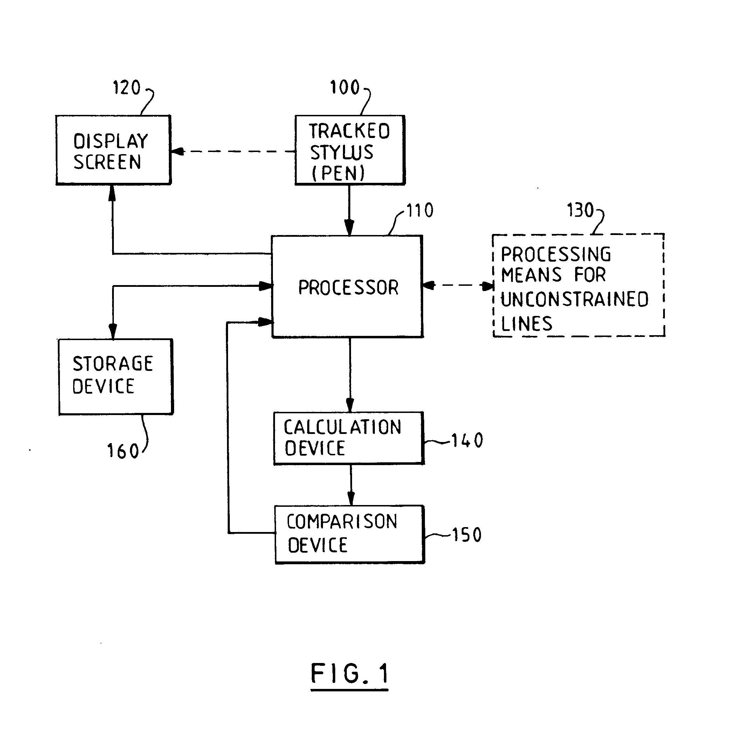

Figure 1 shows a block diagram illustrating a system in accordance with the preferred embodiment of the present invention. Before discussing this figure in detail a few general comments about line interpretation will be made. Lines drawn by a user can generally be split into two classes, namely 'unconstrained' or 'constrained' lines. Unconstrained lines are those that have one or both ends free, whilst constrained lines are those in which both end points are known.

In the initial stage of design the user may draw unconstrained lines. Whilst there are several ways in which unconstrained lines may be interpreted the system of the preferred embodiment deals with such lines by assuming that a) the line is planar and b) that it lies in one of the three axis planes, X (x=const), Y, or Z. To decide on which plane to choose the system computes a 'weight' for each of the three base directions (X, Y, Z) by adding up the projections of each line sub-segment. It also transpires that, particularly for straight or nearly straight lines, the hand (and eye) tend to prefer the horizontal solution to the vertical ones. Accordingly, in the preferred embodiment, there is a built-in 'bias' towards horizontal, which is user-modifiable.

Unconstrained drawing is assumed to apply only at the early stage of a design, i.e. when the user should be sketching the outline, probably with straight lines. Constraining such lines to one of the three primary planes seems more useful than letting them wander. The above described rules have the merit of permitting a) a cube-like box to be immediately constructed, b) an arbitrary shaped horizontal base to be sketched, e.g. the sole of a shoe, and these both represent obvious starting-points for more elaborate designs.

As will be apparent to a person skilled in the art there are several alternative ways in which unconstrained lines can be handled. However, since the present invention particularly relates to a system and method which interprets constrained lines, it is not felt that the matter of unconstrained lines need be discussed in any more detail here. In Figure 1 processing means 130 has been included in dotted lines to indicate that the system of the preferred embodiment includes suitable means to handle unconstrained lines.

The other features of Figure 1 are used by the system of the preferred embodiment to interpret constrained lines, thus replacing ambiguous 2D lines entered by the user with data representing unambiguous 3D lines.

Firstly a user of the system enters a line by moving the pen 100 across the surface of display screen 120. Data representing this line is then passed to the processor 110 where it is checked to ascertain whether the line is constrained or unconstrained. The way in which the preferred embodiment carries out this check will be described later in the description. If the line is unconstrained it is passed to the processing means 130 where it is interpreted as discussed earlier.

If however the line is found to be constrained, the processor 110 subjects the data representing the line to a number of separate processing steps, each step producing data representing an unambiguous candidate line in the 3D space defined by the system. This candidate line data is then passed by processor 110 to a calculation device 140 where the length of each candidate line is determined. Finally a comparison means 150 selects, based on the length values calculated by the calculation device 140, one of the unambiguous candidate lines as a selected representation in 3D space of the ambiguous 2D line.

The data comprising this selected unambiguous line is then returned to processor 110, which passes it on to the storage device 160. The storage device 160 is used to retain all the data of the model being created by the system. Once the new unambiguous line data has been added to the model in storage device 160, the processor will update the image on the display screen 120 so that it represents the model as seen from the current viewing direction.

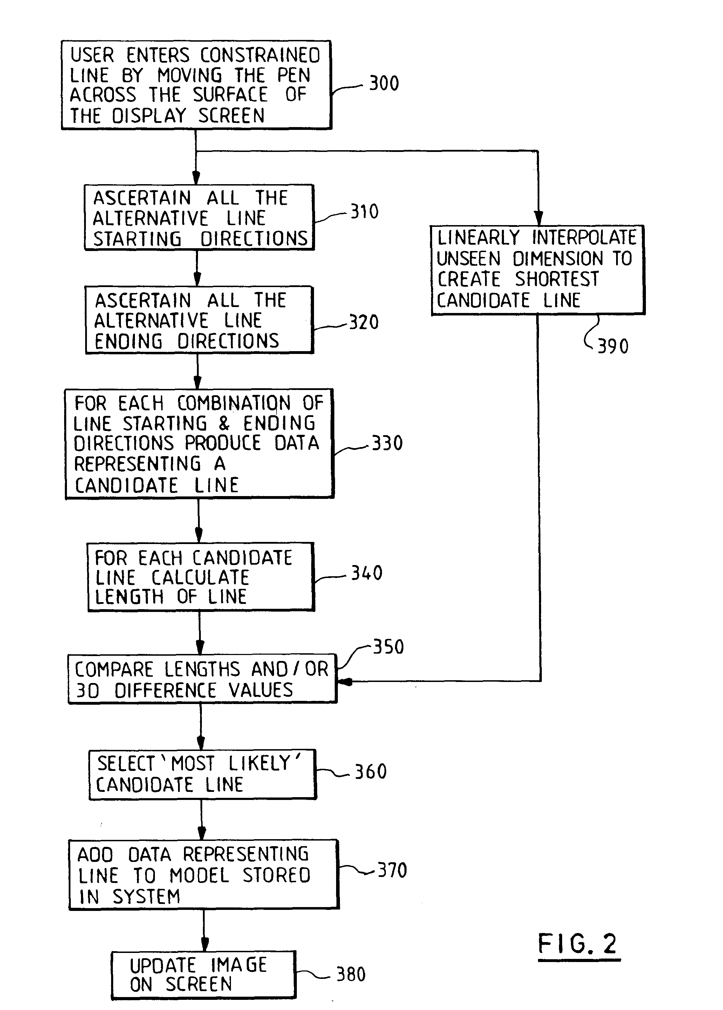

Having discussed the system of the preferred embodiment with reference to figure 1, the processing steps carried out on constrained 2D ambiguous lines so as to replace them with unambiguous 3D lines will now be discussed in more detail. Reference will be made to Figure 2 which illustrates the processing steps carried out by the system of the preferred embodiment, but firstly the general principles will briefly be discussed.

Mathematically the 3D endpoints of a constrained line are known, together with its 2D projection on to the plane of the screen 120 (the viewing plane). The system of the preferred embodiment, given the above information and the knowledge of the existing 3D geometry at the end points, carries out a number of processing steps in order to determine the 'most likely' 3D line.

When a line is constrained, then one obvious solution is to linearly interpolate the third, unseen dimension between the two end-points. This is the mathematically shortest 3D path consistent with the line drawn. However this is not necessarily the most likely solution and so the system of the preferred embodiment takes a number of other potential paths into consideration.

Now consider the processing steps illustrated in Figure 2. Firstly, at step 300 a user of the system enters a constrained 2D line by moving the pen 100 across the surface of the display screen 120. This results in data representing that line being passed to steps 310 and 390. At step 390 the data is linearly interpolated in the unseen dimension so as to generate the shortest candidate solution as discussed above.

At step 310 the system ascertains from the known 3D geometry of the model a number of possible 3D starting directions for the drawn line. Then, by a similar process a number of possible ending directions for the drawn line are derived at step 320. The original line data and the additional information derived at steps 310 and 320 is then passed on to step 330, where for each combination of possible starting and ending directions data representing a candidate line is produced. This calculation is descibed in more detail later in the description.

In particular the system of the preferred embodiment determines the following candidate lines at step 330:
1) Lines with start or end directions perpendicular to all existing intersecting lines:
2) Lines with start or end directions colinear (i.e. continuations of) all existing intersecting lines;
3) Lines with start or end directions lying in planes formed by all pairs of existing intersecting lines or planes defined locally by surfaces already established on the design model;
4) Lines which make an equal angle at both ends with all paired, (but close to parallel) start and end intersectors. This is a 'special case' to detect the common situation of drawing 'struts' or formlines between two nearly parallel longerons.

In cases 1, 2, and 3, the end constraints are permuted, e.g. a line will be a candidate if it starts perpendicular to existing line A and ends as a continuation of line B. Thus dozens or even hundreds of candidates may exist.

Once these candidate lines have been produced the data representing them is passed to step 340, where the length of each candidate line is calculated. These lengths are passed on to step 350, where they are compared with the shortest candidate line calculated at step 390. This shortest (linear interpolation) solution discussed earlier always exists and is always the shortest. At step 350 any candidate lines whose lengths are much greater than the linear interpolation solution (e.g. 50% greater) are rejected. In effect such candidates would be at more than 45 degrees to the shortest line which is an 'unlikely' drawing choice.

Then at step 360 the shortest remaining candidate (other than the linear interpolation one) is selected as most likely, on the basis that it's probably the simplest. However if no other solution exists, then the linear interpolation solution is chosen.

If however multiple candidate lines have nearly the same length as the shortest line, then a potential mischoice exists. If the disparity in 3D space between two close solutions is itself small, then there will be little danger in choosing the shortest, but if the disparity is large, a wrong selection would be noticeable. To avoid this problem the system of the preferred embodiment calculates the 3D disparity between each candidate line and the shortest line (hereafter referred to as the '3D difference value') by summing the 3D distances between corresponding points on both lines. Any sensible correspondence will do, but the preferred choice is to take points at matching percentage lengths along each line. If the 3D difference value is small no real discrepency exists and either solution is adequate; the system can safely select the shortest line. If, however, the difference value is large (greater than a predetermined threshold) then there is a likelihood of ambiguity and the user is prompted to make an immediate choice between such possibilities.

Once the most likely unambiguous 3D line has been selected the data representing that line is added to the model stored in the system (step 370) and the image on the screen is updated (step 380).

Having described the essence of the system of the preferred embodiment, the mechanics of a preferred implementation will now be discussed.

The above-described rules all involve choosing the end gradients for an arbitrary two-ended line, i.e. there are two degrees of freedom. Finding the unseen third dimension can be performed by approximating the line to a cubic (a curve in 3D that passes through 4 known points). The end points are known (because the line is constrained). Let the two internal points of the cubic be P1 $(x1,y1,z1)$ and P2 $(x2,y2,z2)$. Their 2D projections are known, i.e. there are known mappings from $(x1,y1,z1)$ to $(X1,Y1)$ and $(x2,y2,z2)$ to $(X2,Y2)$ based on the current orientation of the model on the screen. The permuted end gradients provide 2 more equations. Thus the six resulting simultaneous equations can be solved to find P1 and P2. The shortest trial cubic is chosen and its third unseen dimension is mapped back on to the original line, using line length as the control parameter.

In this particular method of solution the artist sees his line perfectly represented (from his view) although the third derived dimension is only as complex as the driving cubic.

In summary the system of the preferred embodiment operates based on the following assumptions:

1) Constrained lines favour either:
   a) perpendicularity to existing lines;
   b) continuity with existing lines;
   c) planarity with existing planes; or
   d) equal angles between longerons.

2) The shortest 3D solution from among all permutations is assumed the most likely, unless it would be at significantly more than 45 degrees to the linearly interpolated path, in which case simple linear interpolation is used.

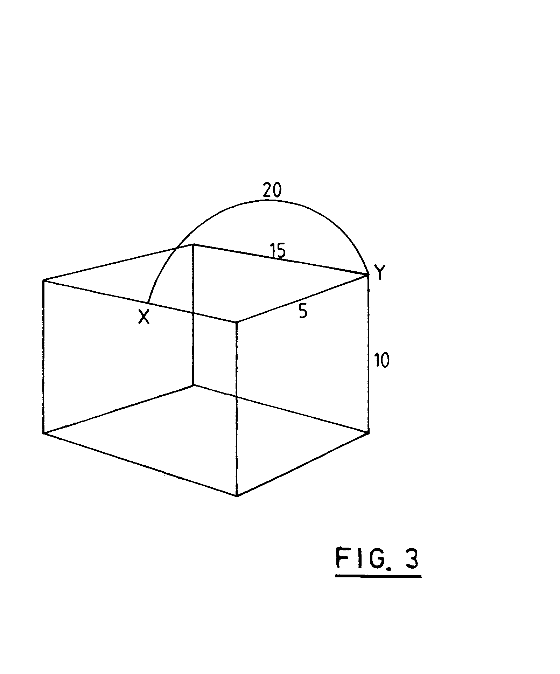

The system of the preferred embodiment will now be illustrated with reference to Figure 3. This figure shows a curved line 20 drawn from a point X on one edge of a box to a vertex Y. Taking X as the start of the line, the two possible starting directions are normal to the edge or a continuation of it. This latter is rejected on the basis that the line could not be a continuation under any reasonable tolerance. At the other end there are twelve possibilities, three lines to be normal to, three planes to lie in, three lines to be continuations of, and three lines to pair with the starting line to see if the equal-angle solution is best.

In this example several possible solutions will be almost equal (depending on the accuracy of the freehand drawing of the cube). The starting directions are all normal to the single edge. The finishing directions, with their corresponding lengths and 3D difference values were as follows:

| Identification | Length | Difference Value |
|---|---|---|
| Continuation of line 10 | 427.47 | 0 |
| Plane formed by lines 5 and 10 | 427.49 | 0.34 |
| Normal to line 5 | 428.42 | 5.69 |
| Plane formed by lines 10 and 15 | 429.92 | 9.84 |
| Normal to line 15 | 431.03 | >10 |

The units are arbitrary but are roughly equal to screen pels. Although the lengths of the contenders are very close, so too is the 3D difference value, as a percentage of length. Hence there is no evident problem in selecting the shortest.

The manner in which the system of the preferred embodiment detects whether a line is a 'constrained' line will now be discussed. Although several possibilities will be apparent to a man skilled in the art the preferred technique is to provide a user-definable tolerance. Such a tolerance value defines how near the pen has to be to an existing line (a 2D tolerance on the face of the screen) before it is considered as starting or ending on that line. If you magnify the object on the display the tolerance does not change. This means that you can pick one line out of a tangle by zooming in.

In the preferred embodiments hits are detected at the beginning and end of a new line only, not at intermediate cross-over points, such a function being deemed too difficult for the designer to control.

## Claims

1. A system for creating a model of an object, such a model being created within a 3D space defined by the system, the system comprising:
   a display device on which an image representing said model can be displayed;
   an entry means for enabling a user to enter an ambiguous 2D line representative of a feature of the object, the endpoints of the ambiguous 2D line being known in the 3D space;
   a processor for subjecting data representing the ambiguous line to a number of separate processing steps, each step producing data representing an unambiguous candidate line in said 3D space;
   a calculation device for calculating the value of a specific parameter of all the unambiguous candidate lines produced by the processor; and
   comparison means to select, according to the values calculated by the calculation device, one of the unambiguous candidate lines as a selected representation in said 3D space of the ambiguous 2D line.

2. A system as claimed in Claim 1 wherein the processing steps employed by the processor give the ambiguous 2D line certain properties.

3. A system as claimed in Claim 2 wherein the certain properties relate to the gradient of the ambiguous line at either or both of its endpoints.

4. A system as claimed in any preceding claim, wherein said entry means is a tracked stylus which is used on the surface of said display device.

5. A system as claimed in any preceding claim, wherein said specific parameter is the length of the unambiguous candidate line in the 3D space.

6. A method of operating a data processing system to create a model of an object, such a model being created within a 3D space defined by the system, the system including a display device on which an image representing said model can be displayed, and an entry means for enabling a user to enter an ambiguous 2D line representative of a feature of the object, the endpoints of the ambiguous 2D line being known in the 3D space; the method comprising the steps of:
   subjecting data representing the ambiguous line to a number of separate processing steps, each step producing data representing an unambiguous candidate line in said 3D space;
   calculating the value of a specific parameter of all the unambiguous candidate lines produced by the processor; and
   selecting, according to the values calculated by the calculation device, one of the unambiguous candidate lines as a selected representation in said 3D space of the ambiguous 2D line.

7. A method as claimed in Claim 6 wherein the processing steps subjected on the data representing the ambiguous line give that line certain properties.

8. A system as claimed in Claim 2 wherein the certain properties relate to the gradient of the ambiguous line at either or both of its endpoints.

FIG. 1

USER ENTERS CONSTRAINED
LINE BY MOVING THE PEN
ACROSS THE SURFACE OF
THE DISPLAY SCREEN ⟍ 300

ASCERTAIN ALL THE
ALTERNATIVE LINE
STARTING DIRECTIONS ⟍ 310

ASCERTAIN ALL THE
ALTERNATIVE LINE
ENDING DIRECTIONS ⟍ 320

FOR EACH COMBINATION OF
LINE STARTING & ENDING
DIRECTIONS PRODUCE DATA ⟍ 330
REPRESENTING A
CANDIDATE LINE

FOR EACH CANDIDATE
LINE CALCULATE ⟍ 340
LENGTH OF LINE

COMPARE LENGTHS AND/OR ⟍ 350
3D DIFFERENCE VALUES

SELECT 'MOST LIKELY'
CANDIDATE LINE ⟍ 360

ADD DATA REPRESENTING
LINE TO MODEL STORED ⟍ 370
IN SYSTEM

UPDATE IMAGE
ON SCREEN ⟍ 380

LINEARLY INTERPOLATE
UNSEEN DIMENSION TO
CREATE SHORTEST
CANDIDATE LINE

⟍ 390

## FIG. 2

8

FIG. 3